(19) Europäisches Patentamt
European Patent Office
Office européen des brevets

(11) **EP 3 073 287 B1**

(12) **EUROPÄISCHE PATENTSCHRIFT**

(45) Veröffentlichungstag und Bekanntmachung des Hinweises auf die Patenterteilung:
**06.05.2020   Patentblatt 2020/19**

(51) Int Cl.:
*G01S 15/93* *(2020.01)*          *G01S 7/52* *(2006.01)*

(21) Anmeldenummer: **16160707.2**

(22) Anmeldetag: **16.03.2016**

(54) **VERFAHREN UND VORRICHTUNG ZUM BESTIMMEN EINER BLINDHEIT EINES JEDEN SENSORS EINER SENSORGRUPPE**

METHOD AND DEVICE FOR DETERMINING A BLINDNESS OF ANY SENSOR OF A SENSOR ARRAY

PROCEDE ET DISPOSITIF DE DETERMINATION D'UN AVEUGLEMENT DE CHAQUE CAPTEUR D'UN GROUPE DE CAPTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2015   DE 102015205180**

(43) Veröffentlichungstag der Anmeldung:
**28.09.2016   Patentblatt 2016/39**

(73) Patentinhaber: **Robert Bosch GmbH**
**70442 Stuttgart (DE)**

(72) Erfinder:
• **Vaczi, Peter**
  **1117 Budapest (HU)**
• **Mayer, Philipp**
  **70176 Stuttgart (DE)**
• **Scherwath, Bernd**
  **71229 Leonberg (DE)**

(56) Entgegenhaltungen:
EP-A1- 2 000 822          DE-A1-102008 042 820
DE-A1-102013 205 312     US-A1- 2002 047 780

**Beschreibung**

Die vorliegende Erfindung betrifft ein Verfahren und eine Vorrichtung zum Bestimmen einer Blindheit eines jeden Sensors einer Sensorgruppe mit wenigstens einem Sensor von mehreren an einem Fahrzeug angebrachten Sensoren, die jeweils zum Aussenden und Empfangen von Ultraschallsignalen ausgebildet sind.

Stand der Technik

Aus dem Stand der Technik sind Fahrerassistenz-Systeme für Fahrzeuge bekannt, die eine Auswertung von Sensorsignalen von an einem Fahrzeug angebrachten Sensoren vornehmen, die jeweils zum Aussenden und Empfangen von Ultraschallsignalen ausgebildet sind. Ein solches Fahrerassistenz-System kann als Einparkhilfssystem ausgebildet sein. Ein solches Einparkhilfssystem wird zunehmend durch komplexere Fahrerassistenz-Funktionen, die beispielsweise eine Ausparkunterstützung und ein autonomes Einparken gewährleisten, ergänzt. Dabei werden Eingriffe in eine Längs- und Querführung des entsprechenden Fahrzeuges sowie in einen während eines Manövrierens bei niedrigen Geschwindigkeiten vorkommenden Bremsvorgang automatisch vorgenommen.

Aufgrund der zunehmenden Sicherheitsaspekte der genannten Fahrerassistenz-Funktionen ist es von zunehmender Bedeutung, bekannte Verfahren zur Erkennung von Degradationen der zuvor genannten Sensoren, wie zum Beispiel bekannte Verfahren zur Erkennung einer Blindheit dieser Sensoren, zu verbessern.

Aus den Dokumenten DE 10 2008 004 641 A1 und DE 10 2009 003 049 A1 sind eine Vorrichtung und ein Verfahren zum Bestimmen einer Blindheit eines an einem Fahrzeug angebrachten Sensors, der zum Aussenden und Empfangen von Ultraschallsignalen ausgebildet ist, bekannt. Dabei wird die Blindheit des Sensors anhand von mittels des Sensors empfangenen und auch als Bodenechos bezeichneten Bodencluttersignalen bestimmt, die infolge einer Aussendung von Ultraschallsignalen entstehen.

Aus einer früheren Patentanmeldung der Anmelderin ist eine Messung von Impedanzwerten einer Impedanz mindestens eines an einem Fahrzeug angebrachten Sensors, der jeweils zum Aussenden und Empfangen von Ultraschallsignalen ausgebildet ist, bekannt. Ferner ist aus derselben Patentanmeldung bekannt, Informationen über eine Blindheit des mindestens einen Sensors anhand einer Auswertung der gemessenen Impedanzwerte zu gewinnen.

Das Dokument DE 10 2005 013 589 A1 beschreibt ein Verfahren zur Funktionsüberprüfung eines Ultraschallsensors, wobei dabei ein erster Ultraschallsensor ein Ultraschallsignal aussendet und ein Funktionieren eines anderes Ultraschallsensors dann festgestellt wird, wenn die Amplitude des von dem ersten Sensors übertragenen Signals einen vorgegebenen, veränderlichen Grenzwert überschreitet.

Aus dem Dokument DE 10 2012 216 968 A1 ist ein Verfahren zur Funktionsüberprüfung eines Ultraschallsensors offenbart, bei dem eine Impedanz eines Ultraschallwandlers durch ein Testsignal gemessen wird und mit einer Referenz verglichen wird, um eine Fehlfunktion festzustellen.

DE 102 47 971 A1 offenbart ein Verfahren zur Störungserkennung eines Nahbereichsüberwachungssystems, bei dem akustische Sensorwerte mindestens eines Sensors bzw. Ultraschallsensors erfasst werden und mit Normalwerten verglichen werden, um eine Störung/Störungsfreiheit festzustellen.

Das Dokument DE 10 2013 205 312 A1 beschreibt ein Verfahren zur Funktionsprüfung eines Ultraschallsensors, wobei zwei Messsignale in zwei Zeitfenstern erfasst werden, aus dem ersten Messsignal ein Schwellwert bestimmt und das zweite Messsignal gegen den Schwellwert verglichen wird, um ein Signal betreffend der Funktionsfähigkeit des Sensors zu erzeugen.

Das Dokument EP 2 000 822 A1 beschreibt ein Verfahren zur Funktionsüberprüfung eines Abstandsmesssystems zur Erfassung von Hindernissen in der Nähe eines Fahrzeugs. Zur Funktionsüberprüfung werden von einem Sensor Boden-Reflektionen des von ihm selbst ausgesendeten Signals empfangen, wie auch Bodenreflektionen der von benachbarten Sensoren ausgesendeten Signale empfangen. Durch Vergleichen dieser Boden-Reflektionen können Rückschlüsse auf die Funktionsfähigkeit des Sensors gezogen werden.

Das Dokument DE 10 2008 042 820 A1 beschreibt eine Sensorvorrichtung mit einem Sensor, bei der eine Impedanzkennlinie des Sensors in Abhängigkeit einer Anregungsfrequenz ermittelt wird. Die ermittelte Impedanzkennlinie wird zur Funktionsüberwachung vorzugsweise mit einer ermittelten Impedanzkennlinie verglichen.

Das Dokument US 2002/0047780 A1 zeigt ein Sensorsystem, bei dem die Funktionsprüfung durchgeführt wird, indem ein Sensor zusätzlich zu Signalen, welche zur Hinderniserkennung dienen, Übersprechsignale an benachbarte Sensoren sendet und überprüft, inwieweit diese von den benachbarten Sensoren empfangen werden. Können die Übersprechsignale von den benachbarten Sensoren nicht empfangen werden, ist dies ein Zeichen für eine Verschmutzung des benachbarten Sensors.

Offenbarung der Erfindung

Erfindungsgemäß wird ein Verfahren zum Bestimmen einer Blindheit eines jeden Sensors einer Sensorgruppe mit mindestens einem Sensor von mehreren an einem Fahrzeug angebrachten Sensoren, die jeweils zum Aussenden und Empfangen von Ultraschallsignalen ausgebildet sind, bekannt. Das erfindungsgemäße Verfahren umfasst einen Schritt eines Durchführens von mehreren voneinander unabhängigen Messungen für jeden Sensor der Sensorgruppe. Dabei erfolgt bei den für jeden Sensor der Sensorgruppe durchgeführten Messungen jeweils ein Ermitteln mindestens eines Blindheitsrisikos für den entsprechenden Sensor anhand einer Auswertung einer physikalischen Größe des entsprechenden Sensors oder anhand einer Auswertung von mittels des entsprechenden Sensors empfangenen Ultraschallsignalen. Ferner umfasst das Verfahren einen Schritt eines Bestimmens einer Blindheit und einer dazugehörige Konfidenz jedes Sensors der Sensorgruppe anhand der für den entsprechenden Sensor ermittelten Blindheitsrisiken.

Erfindungsgemäß wird ferner eine Vorrichtung zum Bestimmen einer Blindheit eines jeden Sensors einer Sensorgruppe mit mindestens einem Sensor von mehreren an einem Fahrzeug angebrachten Sensoren vorgeschlagen. Die Vorrichtung umfasst mindestens eine Messeinheit und eine Auswerteeinheit. Jeder Sensor der mehreren Sensoren ist dabei zum Aussenden und Empfangen von Ultraschallsignalen ausgebildet. Ferner ist die mindestens eine Messeinheit dazu ausgebildet, für jeden Sensor der Sensorgruppe jeweils mehrere Blindheitsrisiken zu ermitteln. Dabei ermittelt die mindestens eine Messeinheit jedes Blindheitsrisiko für einen Sensor der Sensorgruppe gemäß einer Messung von für den entsprechenden Sensor gemäß dem erfindungsgemäßen Verfahren durchzuführenden mehreren Messungen. Weiterhin ist die Auswerteeinheit dazu ausgebildet ist, eine Blindheit und eine dazugehörige Konfidenz jedes Sensors der Sensorgruppe jeweils anhand der für den entsprechenden Sensor mittels der mindestens einen Messeinheit ermittelten Blindheitsrisiken zu bestimmen. Auch umfasst die mindestens eine Messeinheit bevorzugt mindestens einen gleitenden Mittelwertfilter.

Die Unteransprüche zeigen bevorzugte Weiterbildungen der Erfindung.

Vorteilhaft bei der Erfindung ist, dass jede für einen Sensor der Sensorgruppe durchgeführte Messung einzeln bewertet wird, so dass bei jeder Messung ein Blindheitsrisiko für den entsprechenden Sensor ermittelt wird. Aus den mehreren ermittelten Blindheitsrisiken für den entsprechenden Sensor wird dann anschließend bevorzugt unter Verwendung eines Regelwerkes oder einer Formel eine Blindheit und eine dazugehörige Konfidenz des entsprechenden Sensors berechnet.

Sehr vorteilhaft bei der Erfindung ist ferner, dass dadurch, dass für jeden Sensor der Sensorgruppe mehrere Messungen durchgeführt werden, sowohl redundante als auch komplementäre Informationen über die Blindheit des entsprechenden Sensors erhalten werden können. Da die mehreren für jeden Sensor der Sensorgruppe durchgeführten Messungen unterschiedlich empfindlich gegenüber einer tatsächlich vorhanden Blindheit des entsprechenden Sensors sind, kann eine tatsächlich vorhandene Blindheit des entsprechenden Sensors mit höherer Wahrscheinlichkeit festgestellt beziehungsweise genauer bestimmt werden. Folglich wird durch die Erfindung eine zuverlässige Erkennung der Blindheit jedes Sensors der Sensorgruppe gewährleistet, die beispielsweise auftritt, wenn eine Membran des entsprechenden Sensors durch eine infolge von Verschmutzungen oder Schnee entstandene Masse beschwert wird oder Risse und Brüche aufweist.

Bei der Erfindung wird jedes Blindheitsrisiko, jede Blindheit und jede Konfidenz bevorzugt in mehreren Stufen angegeben. Beispielsweise kann jedes Blindheitsrisiko, jede Blindheit und jede Konfidenz jeweils als sehr niedrig, niedrig, mittel, hoch oder sehr hoch eingestuft werden.

Bei einer bevorzugten Ausführungsform der Erfindung umfasst das erfindungsgemäße Verfahren ein Durchführen einer ersten Messung für jeden Sensor der Sensorgruppe. Dabei umfasst jede erste Messung einen Schritt eines wiederholten Messens eines Impedanzwertes einer Impedanz des entsprechenden Sensors, und einen Schritt eines Bestimmens eines ersten Blindheitsrisikos für den entsprechenden Sensor anhand einer Auswertung seiner gemessenen Impedanzwerte.

Bei einer anderen bevorzugten Ausführungsform der Erfindung umfasst das erfindungsgemäße Verfahren ein Durchführen einer zweiten Messung für jeden Sensor der Sensorgruppe. Dabei umfasst jede zweite Messung einen Schritt eines jeweiligen Messens einer Amplitude mindestens eines von dem entsprechenden Sensor empfangenen Übersprechsignals, das jeweils ein von einem anderen Sensor der mehreren Sensoren ausgesendeten und von dem entsprechenden Sensor empfangenes Ultraschallsignal ist. Ferner umfasst jede zweite Messung einen Schritt eines Bestimmens eines zweiten Blindheitsrisikos für den entsprechenden Sensor anhand einer Auswertung der jeweils gemessenen Amplitude des mindestens einen von dem entsprechenden Sensor empfangenen Übersprechsignals.

Bei einer sehr bevorzugten Ausführungsform der Erfindung umfasst das erfindungsgemäße Verfahren bevorzugt einen für jeden Sensor der Sensorgruppe durchzuführenden Schritt eines Messens eines ersten Signalpegels von infolge einer Aussendung von Ultraschallsignalen entstandenen und mittels des entsprechenden Sensors empfangenen Bodencluttersignalen während eines jeden Messzyklus von für den entsprechenden Sensor durchgeführten mehreren Messzyklen. Ferner umfasst das erfindungsgemäße Verfahren bevorzugt einen für jeden Sensor der Sensorgruppe durchzuführenden Schritt eines Messens eines zweiten Signalpegels von mittels des entsprechenden Sensors empfangenen Rauschsignalen während jedes Messzyklus der für den entsprechenden Sensor durchgeführten mehreren Messzyklen. Ferner umfasst das erfindungsgemäße Verfahren bevorzugt einen für jeden Sensor der Sensorgruppe durchzuführenden Schritt eines Durchführens einer dritte Messung und/oder einer vierten Messung der für den entsprechenden Sensor durchzuführenden mehreren Messungen. Dabei werden bei jeder dritten Messung und/oder bei jeder vierten Messung jeweils mehrere der für mindestens einen Sensor der Sensorgruppe gemessenen ersten Signalpegel und/oder mehrere der für mindestens einen Sensor der Sensorgruppe gemessenen zweiten Signalpegel verwendet.

Unter einem Bodencluttersignal wird hier ein von einem Sensor der Sensorgruppe empfangenen Ultraschallsignal verstanden, der durch Reflexion eines ausgesendeten Ultraschalsignals an einem Boden, auf dem sich das Fahrzeug mit den mehreren Sensoren befindet, entsteht.

Bevorzugt wird jeder erste Signalpegel anhand von Amplituden von Bodencluttersignalen berechnet, die mittels des entsprechenden Sensors während eines innerhalb des entsprechenden Messzyklus vorkommenden ersten Zeitintervalls empfangen werden. So kann jeder erste Signalpegel als ein Maximum oder als ein Mittelwert der Amplituden der entsprechenden Bodencluttersignale definiert sein.

Weiter bevorzugt wird jeder zweite Signalpegel anhand von Signalstärken von Rauschsignalen berechnet, die mittels des entsprechenden Sensors während eines innerhalb des entsprechenden Messzyklus vorkommenden zweiten Zeitintervalls empfangen werden. So kann jeder zweite Signalpegel als ein Maximum oder ein Mittelwert der Signalstärken der entsprechenden Rauschsignale definiert sein.

Bei einer vorteilhaften Ausführungsform der Erfindung umfasst jede dritte Messung einen Schritt eines Definierens jeweils eines Messwertes für jeden Messzyklus der für den entsprechenden Sensor durchgeführten mehreren Messzyklen. Auch umfasst jede dritte Messung einen Schritt eines Bestimmens jedes für den entsprechenden Sensor definierten Messwertes durch Bilden einer Differenz zwischen den für den entsprechenden Sensor in dem entsprechenden Messzyklus gemessenen zwei Signalpegeln. Ferner umfasst jede dritte Messung auch einen Schritt eines Bestimmens eines Mittelwertes der während der mehreren für den entsprechenden Sensor durchgeführten Messzyklen bestimmten Messwerte. Auch umfasst jede dritte Messung einen Schritt eines Ermittelns eines dritten Blindheitsrisikos für den entsprechenden Sensor anhand einer Auswertung seines gebildeten Mittelwertes.

Bei einer anderen vorteilhaften Ausführungsform der Erfindung umfasst jede vierte Messung einen Schritt eines Erzeugens eines dem entsprechenden Sensor zugeordneten ersten Messsignals mittels der für den entsprechenden Sensor gemessenen ersten Signalpegel und/oder einen Schritt eines Erzeugens eines dem entsprechenden Sensor zugeordneten zweiten Messsignals mittels der für den entsprechenden Sensor gemessenen zweiten Signalpegeln. Ferner umfasst die vierte Messung einen Schritt eines Ermittelns eines vierten Blindheitsrisikos und/oder eines fünften Blindheitsrisikos für den entsprechenden Sensor jeweils anhand mindestens einer Auswertung von mehreren jeweils einem anderen Sensor der Sensorgruppe zugeordneten Messsignalen der den Sensoren der Sensorgruppe zugeordneten Messsignale.

Bei einer weiteren vorteilhaften Ausführungsform der Erfindung umfasst jede vierte Messung einen Schritt eines Zuordnens jeweils einer Laufnummer zu jedem Messzyklus der für den entsprechenden Sensor durchgeführten mehreren Messzyklen. Ferner umfasst jede vierte Messung einen Schritt eines derartigen Definierens eines kontinuierlichen Zahlenwertebereiches einer wachsenden natürlichen Zahl, dass der Zahlenwertebereich mehrere der Laufnummer der für den entsprechenden Sensor durchgeführten mehreren Messzyklen umfasst. Auch umfasst jede vierte Messung bevorzugt einen Schritt eines Erzeugens eines dem entsprechenden Sensor zugeordneten ersten Signals in Abhängigkeit von der wachsenden natürlichen Zahl. Dabei wird jedes erste Signal derartig erzeugt, dass dieses für jede in dem Zahlenwertebereich vorkommende Laufnummer einen Signalwert annimmt, der gleich mit dem für den entsprechenden Sensor während des der entsprechenden Laufnummer zugeordneten Messzyklus gemessenen ersten Signalpegel ist. Ferner umfasst jede vierte Messung bevorzugt einen Schritt eines Erzeugens eines dem entsprechenden Sensor zugeordneten zweiten Signals in Abhängigkeit von der wachsenden natürlichen Zahl. Dabei wird jedes zweite Signal derartig erzeugt, dass dieses für jede in dem Zahlenwertebereich vorkommende Laufnummer einen Signalwert annimmt, der gleich mit dem für den entsprechenden Sensor während des der entsprechenden Laufnummer zugeordneten Messzyklus gemessenen zweite Signalpegel ist. Des Weiteren umfasst jede vierte Messung bevorzugt einen Schritt eines Durchführens des Erzeugens des dem entsprechenden Sensor zugeordneten ersten Messsignals durch Anwenden einer gleitenden Mittelwertfilterung auf das dem entsprechenden Sensor zugeordnete erste Signal. Auch umfasst jede vierte Messung bevorzugt einen Schritt eines Durchführens des Erzeugens des dem entsprechenden Sensor zugeordneten zweiten Messsignals durch Anwenden einer gleitenden Mittelwertfilterung auf das dem entsprechenden Sensor zugeordnete zweite Signal.

Vorzugsweise ist jede der Laufnummern, die den Messzyklen zugeordnet sind, die für jeden Sensor der Sensorgruppe durchgeführt werden, umso größer, umso später der entsprechende Messzyklus durchgeführt wird.

Bevorzugt stimmt jedes einem Sensor der Sensorgruppe zugeordnete erste Messsignal mit demjenigen mittels mindestens eines gleitenden Mittelwertfilters gefilterten ersten Signals überein, das demselben Sensor zugeordnet ist.

Weiter bevorzugt stimmt jedes einem Sensor der Sensorgruppe zugeordnete zweite Messsignal mit demjenigen mittels mindestens eines gleitenden Mittelwertfilters gefilterten zweiten Signal überein, das demselben Sensor zugeordnet ist.

Bei einer anderen vorteilhaften Ausführungsform der Erfindung umfasst jede vierte Messung bevorzugt einen Schritt eines Durchführens des Ermittelns des vierten Blindheitsrisikos anhand einer Auswertung mindestens eines jeweils durch Bilden einer Differenz zwischen dem dem entsprechenden Sensor zugeordneten ersten Messsignal und dem einem anderen Sensor zugeordneten ersten Messsignals erzeugten ersten Differenzsignals. Ferner umfasst jede vierte Messung bevorzugt einen Schritt eines Durchführens des Ermittelns des vierten Blindheitsrisikos anhand einer Auswertung mindestens eines jeweils durch Bilden einer Differenz zwischen dem dem entsprechenden Sensor zugeordneten zweiten Messsignal und dem einem anderen Sensor zugeordneten zweiten Messsignals erzeugten zweiten Differenzsignals.

Bei einer sehr vorteilhaften Ausführungsform der Erfindung umfasst jede vierte Messung einen Schritt eines Auswählens eines ersten Signalteils des dem entsprechenden Sensor zugeordneten ersten Messsignals und eines zweiten Signalteils desselben ersten Messsignals. Dabei hat der erste Signalteil jedes ersten Messsignals einen von dem entsprechenden ersten Messsignal innerhalb eines kontinuierlichen und eine vorbestimmte Wertebereichsgröße aufweisenden ersten Zahlenwerteteilbereichs angenommenen Verlauf. Ferner hat der zweite Signalteil jedes ersten Messsignals einen von dem entsprechenden ersten Messsignal innerhalb eines kontinuierlichen und die vorbestimmte Wertebereichsgröße aufweisenden zweiten Zahlenwerteteilbereiches angenommenen Verlauf. Ferner umfasst jede vierte Messung einen Schritt eines Erzeugens eines dem entsprechenden Sensor zugeordneten dritten Differenzsignals durch Bilden eines·Betrages einer Differenz zwischen dem in den zweiten Zahlenwerteteilbereich verschobenen ersten Signalteil des dem entsprechenden Sensor zugeordneten ersten Messsignals und dem zweiten Signalteil desselben ersten Messsignals. Weiterhin umfasst jede vierte Messung einen Schritt eines Durchführens des Ermittelns des fünften Blindheitsrisikos für den entsprechenden Sensor anhand mindestens eines jeweils zwischen dem dem entsprechenden Sensor zugeordneten dritten Differenzsignal und dem einem anderen Sensor der Sensorgruppe zugeordneten dritten Differenzsignal durchgeführten Vergleiches.

Bei einer anderen sehr vorteilhaften Ausführungsform der Erfindung umfasst jede vierte Messung einen Schritt eines Feststellens eines Signalwertsprunges des dem entsprechenden Sensor zugeordneten ersten Messsignals. Dabei wird jedes Signalwertsprung eines einem Sensor der Sensorgruppe zugeordneten ersten Messsignals festgestellt, wenn das dem entsprechenden Sensor zugeordnete dritte Differenzsignal einen Schwellenwert überschreitet. Auch umfasst jede vierte Messung einen Schritt eines Durchführens des mindestens einen Vergleiches zum Bestimmen des fünften Blindheitsrisikos für den entsprechenden Sensor jeweils in Abhängigkeit von den mittels der zu vergleichenden dritten Differenzsignale festgestellten Signalwertsprüngen.

Beispielsweise wird untersucht, ob für zwei Sensoren der Sensorgruppe während eines spezifizierten Zeitraums jeweils ein Signalwertsprung des entsprechenden ersten Messsignals auftritt. Dabei ist der spezifizierte Zeitraum bevorzug kleiner oder gleich einem Zeitraum, in dem für jeden Sensor der Sensorgruppe die Messzyklen mit den in dem Zahlenwertebereich liegenden Laufnummern durchgeführt werden. Tritt für jeden Sensor der zwei zu untersuchenden Sensoren ein Signalwertsprung des entsprechenden ersten Messsignals auf, so kann mit großer Wahrscheinlichkeit auf eine Änderung einer Beschaffenheit des Bodens, auf dem das Fahrzeug mit den mehreren Sensoren fährt, geschlussfolgert werden. Dabei wird das fünfte Blindheitsrisiko für jeden der zwei zu untersuchenden Sensoren bevorzugt als unbekannt eingestuft. Tritt nur für einen der zwei zu untersuchenden Sensoren ein Signalwertsprung des entsprechenden ersten Messsignals auf, so kann mit großer Wahrscheinlichkeit auf eine tatsächlich vorhandene Blindheit desjenigen Sensor der zwei zu untersuchenden Sensoren schlussfolgert werden, für den kein Signalwertsprung des entsprechenden ersten Messsignals auftritt. Dabei wird das fünfte Blindheitsrisiko für denjenigen der zwei zu untersuchenden Sensoren, für den kein Signalwertsprung des entsprechenden ersten Messsignals auftritt, bevorzugt als "mittel" oder "hoch" eingestuft. Tritt für jeden Sensor der zwei zu untersuchenden Sensoren kein Signalwertsprung des entsprechenden ersten Messsignals auf, so wird das fünfte Blindheitsrisiko für jeden der zwei zu untersuchenden Sensoren bevorzugt als unbekannt eingestuft. Die zwei zu untersuchenden Sensoren können zwei nahe beieinander verbaute Sensoren oder spiegelsymmetrisch verbaute Sensoren sein. Zusammenfassend kann für jeden Sensor der Sensorgruppe das fünfte Blindheitsrisiko in Abhängigkeit von einer Höhe des Signalwertsprungs des dem entsprechenden Sensor zugeordneten ersten Messsignals generiert werden.

Ein weiterer Aspekt der Erfindung betrifft ein Fahrzeug mit mehreren an diesem angebrachten Sensoren, die jeweils zum Aussenden und Empfangen von Ultraschallsignalen ausgebildet sind, und einer erfindungsgemäßen Vorrichtung.

Kurze Beschreibung der Zeichnungen

Nachfolgend werden Ausführungsbeispiele der Erfindung unter Bezugnahme auf die begleitenden Zeichnungen im Detail beschrieben. Für gleiche Größen und Parameter werden jeweils gleiche Bezugszeichen verwendet. Jede Größe und jeder Parameter werden jeweils einmalig eingeführt und bei Wiederholung jeweils als schon bekannt behandelt, unabhängig davon, auf welche Zeichnung sich ein jeweils entsprechender Beschreibungsteil, in dem die entsprechende Größe oder der entsprechende Parameter wiederholt vorkommt, bezieht. In den Zeichnungen ist:

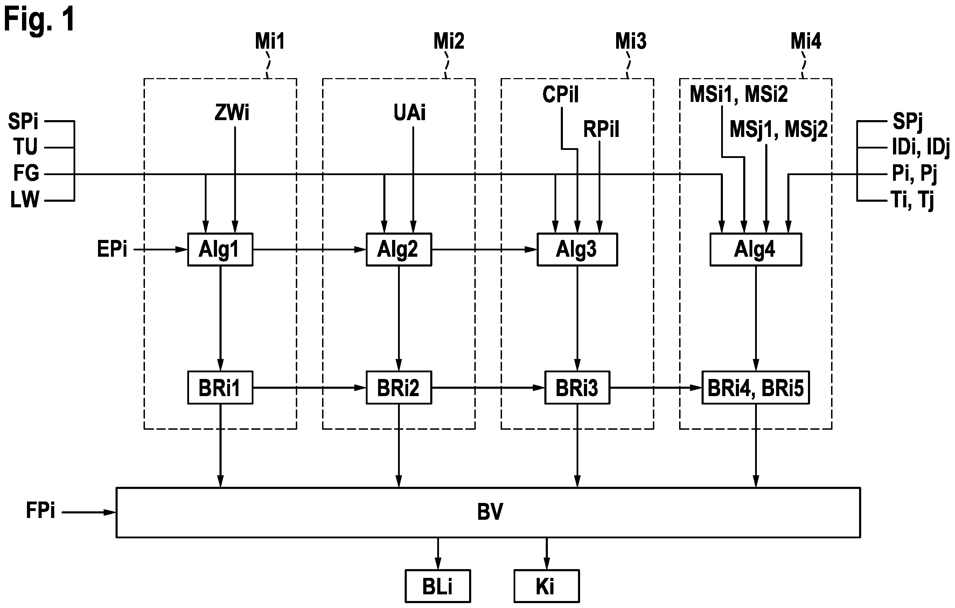

Figur 1      ein stark schematisiertes Ablaufdiagramm eines gemäß einer ersten Ausführungsform der Erfindung durchgeführten Bestimmens einer Blindheit und einer dazugehörigen Konfidenz eines jeden Sensors einer Sensorgruppe mit mindestens einem Sensor von mehreren an einem Fahrzeug angebrachten Sensoren, die jeweils zum Aussenden und Empfangen von Ultraschallsignalen ausgebildet sind,

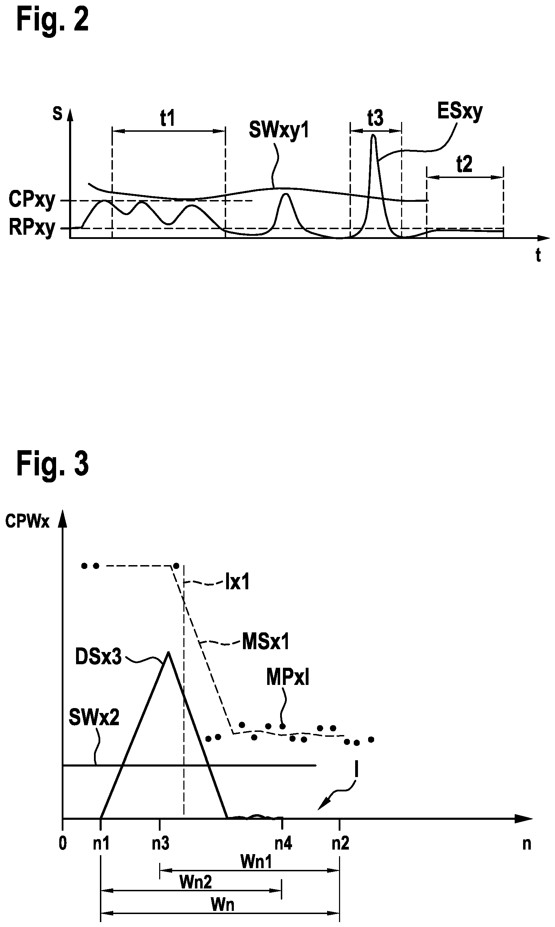

Figur 2     ein in Abhängigkeit von einer Zeit dargestellter und während eines beispielhaft ausgewählten Messzyklus vorkommender Verlauf einer Signalstärke eines Empfangssignals eines beispielhaft ausgewählten Sensors der Sensorgruppe wobei das in der Figur 2 dargestellten Empfangssignal bei dem gemäß der ersten Ausführungsform der Erfindung durchgeführten Bestimmen der Blindheit und der dazugehörigen Konfidenz des beispielhaft ausgewählten Sensors verwendet wird, und

Figur 3     mehrere jeweils in Abhängigkeit von einer wachsenden natürlichen Zahl dargestellte Verläufe mehrerer dem beispielhaft ausgewählten Sensor der Sensorgruppe zugeordneter Signale, die beim gemäß der ersten Ausführungsform der Erfindung durchgeführten Bestimmen der Blindheit und der dazugehörigen Konfidenz des beispielhaft ausgewählten Sensors verwendet werden.

Ausführungsformen der Erfindung

Figur 1 zeigt ein stark schematisiertes Ablaufdiagramm eines gemäß einer ersten Ausführungsform der Erfindung durchgeführten Bestimmens einer Blindheit $BL_i$ und einer dazugehörigen Konfidenz $K_i$ eines jeden Sensors einer Sensorgruppe mit mindestens einem Sensor von mehreren an einem Fahrzeug angebrachten Sensoren, die jeweils zum Aussenden und Empfangen von Ultraschallsignalen ausgebildet sind. Für Größen, die sich auf ein und denselben Sensor der Sensorgruppe beziehen, wird hier und im Folgenden ein und derselbe Index i verwendet. Für Größen, die sich auf unterschiedliche Sensoren der Sensorgruppe beziehen, werden unterschiedliche Indexe i und j verwendet. Die Sensorgruppe kann eine jede Anzahl von Sensoren umfassen, die kleiner oder gleich mit einer Gesamtanzahl der mehreren an dem Fahrzeug angebrachten Sensoren ist.

Zum Bestimmen der Blindheit $BL_i$ und der dazugehörigen Konfidenz $K_i$ jedes Sensors der Sensorgruppe werden für jeden Sensor der Gruppe eine erste Messung $M_{i1}$, eine zweite Messung $M_{i2}$, eine dritte Messung $M_{i3}$ und eine vierte Messung $M_{i4}$ durchgeführt.

Zum Bestimmen der Blindheiten $BL_i$ und der dazugehörigen Konfidenzen $K_i$ der Sensoren der Sensorgruppe werden bevorzugt Parameter einer jeden jeweils einem Sensor der Sensorgruppe zugeordneten ersten Parametergruppe und/oder Parameter einer jeden jeweils einem Sensor der Sensorgruppe zugeordneten zweiten Parametergruppe berücksichtigt. Jede erste Parametergruppe umfasst sensorspezifische Parameter $SP_i$ des entsprechenden Sensors, eine aktuelle Umgebungstemperatur TU, eine aktuelle Geschwindigkeit FG des Fahrzeuges mit den mehreren Sensoren und einen aktuellen Lenkradwinkel LW des entsprechenden Fahrzeuges. Jede zweite Parametergruppe umfasst eine Kennzahl $ID_i$, einen Schalldruck $P_i$ und eine Temperatur $T_i$ des entsprechenden Sensors. Bei dem Bestimmen der Blindheiten $BL_i$ und der dazugehörigen Konfidenzen $K_i$ der Sensoren der Sensorgruppe können ferner auch andere Parameter wie zum Beispiel ein Empfindlichkeitsparameter $EP_i$ jedes Sensors der Sensorgruppe, der anhand von Informationen über eine Empfindlichkeit des entsprechenden Sensors berechnet wird, oder ein Fehlzustandsparameter $FP_i$, der Informationen über elektrische Ausfälle oder eine Störung des entsprechenden Sensors berechnet wird.

Bei jeder ersten Messung $M_{i1}$ werden Impedanzwerte $ZW_i$ einer Impedanz des entsprechenden Sensors zu unterschiedlichen Zeitpunkten gemessen. Mittels eines bei jeder ersten Messung $M_{i1}$ verwendeten ersten Algorithmus $Alg_1$ wird dann für jeden Sensor der Sensorgruppe ein erstes Blindheitsrisiko $BR_{i1}$ anhand einer Auswertung der für den entsprechenden Sensor i gemessenen Impedanzwerte $Zw_i$ ermittelt.

Bei jeder zweiten Messung $M_{i2}$ wird eine Amplitude $UA_i$ mindestens eines von dem entsprechenden Sensor empfangenen Übersprechsignals gemessen, das jeweils ein von einem anderen Sensor der mehreren Sensoren ausgesendeten und von dem entsprechenden Sensor empfangenen Ultraschallsignal ist. Mittels eines bei jeder zweiten Messung $M2_i$ verwendeten zweiten Algorithmus $Alg_2$ wird dann für jeden Sensor der Sensorgruppe ein erstes Blindheitsrisiko $BR_{i2}$ anhand einer Auswertung der gemessenen Amplitude $UA_i$ des mindestens einen von dem entsprechenden Sensor empfangenen Übersprechsignals ermittelt.

Zum Bestimmen der Blindheiten $BL_i$ und der dazugehörigen Konfidenzen $K_i$ der Sensoren der Sensorgruppe wird für jeden Sensor der Sensorgruppe ein erster Signalpegel $CP_{il}$ von infolge einer Aussendung von Ultraschallsignalen entstandenen und mittels des entsprechenden Sensors empfangenen Bodencluttersignalen während eines jeden Messzyklus von mehreren für den entsprechenden Sensor durchgeführten Messzyklen gemessen. Zum Bestimmen der Blindheiten $BL_i$ und der dazugehörigen Konfidenzen $K_i$ der Sensoren der Sensorgruppe wird ferner für jeden Sensor der Sensorgruppe ein zweiter Signalpegel $RP_{il}$ von mittels des entsprechenden Sensors empfangenen Rauschsignalen während jedes Messzyklus der für den entsprechenden Sensor durchgeführten mehreren Messzyklen gemessen. Dabei wird für jeden Sensor der Sensorgruppe eine und dieselbe Anzahl von Messzyklen innerhalb eines und desselben Zeitraumes durchgeführt. Auch wird für jeden Sensor jeweils eine Laufnummer I zu jedem Messzyklus der mehreren für den entsprechenden Sensor durchgeführten Messzyklen zugeordnet, die umso größer ist, je später der dieser Laufnummer I zugeordnete Messzyklus durchgeführt wird. Ferner ist jede Laufnummer I eine zwischen 1 und der für jeden Sensor der Sensorgruppe durchzuführende Anzahl der Messzyklen liegende natürliche Zahl.

Eine für jeden Sensor der Sensorgruppe durchgeführte Messung der zwei Signalpegel CPil, RPil wird in Zusammenhang mit der Figur 2 anhand einer für einen beispielhaft ausgewählten Sensor der Sensorgruppe während eines beispielhaft ausgewählten Messzyklus durchgeführten Messung der zwei Signalpegel CPxy, RPxy näher beschrieben. Der Index x wird hier und im Folgenden für Größen, die sich jeweils auf den beispielhaft ausgewählten Sensor beziehen, verwendet. Das bedeutet, dass für die Größen, die sich jeweils auf den beispielhaft ausgewählten Sensor beziehen, die Gleichung i = x gültig ist. Der Index y bezieht sich hier und im Folgenden auf Größen der zuvor genannten Größen, die sich ferner jeweils auch den beispielhaft ausgewählten Messzyklus der für den beispielhaft ausgewählten Sensor durchzuführenden mehreren Messzyklen beziehen.

Bei jeder dritten Messung Mi3 werden die für den entsprechenden Sensor gemessenen zwei Signalpegel Cil, RPil verwendet. Mittels eines bei jeder dritten Messung Mi3 verwendeten dritten Algorithmus Alg3 wird für jeden Sensor der Sensorgruppe für jeden Messzyklus der für den entsprechenden Sensor durchgeführten mehreren Messzyklen jeweils ein Messwert definiert. Mittels des dritten Algorithmus Alg3 wird ferner jeder für einen Sensor der Sensorgruppe definierte Messwert durch Bilden einer Differenz zwischen den für den entsprechenden Sensor während des entsprechenden Messzyklus gemessenen zwei Signalpegeln Cil, RPil bestimmt. Mittels des dritten Algorithmus Alg3 wird ferner für jeden Sensor der Sensorgruppe ein Mittelwert der während der für den entsprechenden Sensor durchgeführten mehreren Messzyklen bestimmten Messwerte bestimmt. Mittels des dritten Algorithmus Alg3 wird dann für jeden Sensor der Sensorgruppe ein drittes Blindheitsrisiko BRi3 anhand einer Auswertung seines gebildeten Mittelwertes ermittelt.

Bei den zur Ermittlung jedes ersten Blindheitsrisikos BRi1, jedes zweiten Blindheitsrisikos BRi2 und jedes dritten Blindheitsrisikos BRi3 durchgeführten Auswertungen werden bevorzugt jeweils die Parameter SPi, TU, FG, LW der dem entsprechenden Sensor zugeordnete erste Parametergruppe und der Empfindlichkeitsparameter EPi des entsprechenden Sensors berücksichtigt.

Zum Durchführen jeder vierten Messung Mi4 wird für jeden Sensor bevorzugt ein dem entsprechenden Sensor zugeordnetes erstes Messsignal MSi1 mittels der für den entsprechenden Sensor gemessenen ersten Signalpegel CPil erzeugt. Zum Durchführen jeder vierten Messung Mi4 wird ferner für jeden Sensor bevorzugt ein dem entsprechenden Sensor zugeordnetes zweites Messsignal MSi2 mittels der für den entsprechenden Sensor gemessenen zweiten Signalpegel RPil erzeugt. Zum Erzeugen jedes Messsignals MSi1, MSi2, wird zunächst ein kontinuierlicher Zahlenwertebereich einer wachsenden natürlichen Zahl n derartig definiert, dass der Zahlenwertebereich mehrere der Laufnummer der für den entsprechenden Sensor durchzuführenden mehreren Messzyklen umfasst. Ferner wird für jeden Sensor der Sensorgruppe bevorzugt ein dem entsprechenden Sensor zugeordnetes erstes Signal in Abhängigkeit von der wachsenden natürlichen Zahl n erzeugt. Dabei wird jedes erste Signal derartig erzeugt, dass dieses für jede in dem Zahlenwertebereich vorkommende Laufnummer I einen Signalwert annimmt, der gleich dem für den entsprechenden Sensor während des der entsprechenden Laufnummer I zugeordneten Messzyklus gemessenen ersten Signalpegel CPil ist. Dabei stimmt jedes erste Messsignal MSi1 mit dem mittels eines gleitenden Mittelwertfilters gefilterten ersten Signal überein, das demselben Sensor zugeordnet ist. Auch wird für jeden Sensor der Sensorgruppe bevorzugt ein dem entsprechenden Sensor zugeordnetes zweites Signal in Abhängigkeit von der wachsenden natürlichen Zahl n erzeugt. Dabei wird jedes zweite Signal derartig erzeugt, dass dieses für jede in dem Zahlenwertebereich vorkommende Laufnummer I einen Signalwert annimmt, der gleich dem für den entsprechenden Sensor während des der entsprechenden Laufnummer I zugeordneten Messzyklus gemessenen zweiten Signalpegel RPil ist. Dabei stimmt jedes zweite Messsignal MSi2 mit dem mittels eines gleitenden Mittelwertfilters gefilterten zweiten Signal überein, das demselben Sensor zugeordnet ist.

Mittels eines bei jeder vierten Messung Mi4 verwendeten vierten Algorithmus Alg4 wird für jeden Sensor der Sensorgruppe bevorzugt mindestens ein erstes Differenzsignal jeweils durch Bilden einer Differenz zwischen dem dem entsprechenden Sensor zugeordneten ersten Messsignal MSi1 und dem einem anderen Sensor der Sensorgruppe zugeordneten ersten Messsignal MSj1 erzeugt. Mittels des vierten Algorithmus Alg4 wird ferner für jeden Sensor der Sensorgruppe bevorzugt mindestens ein zweites Differenzsignal jeweils durch Bilden einer Differenz zwischen dem dem entsprechenden Sensor zugeordneten zweiten Messsignal MSi2 und dem einem anderen Sensor der Sensorgruppe zugeordneten zweiten Messsignals MSj2 erzeugt. Mittels des vierten Algorithmus Alg4 wird weiterhin für jeden Sensor der Sensorgruppe ein viertes Blindheitsrisikos BRi4 anhand einer Auswertung des mindestens einen für den entsprechenden Sensor erzeugten ersten Differenzsignals und/oder des mindestens einen für den entsprechenden Sensor erzeugten zweiten Differenzsignals ermittelt.

Mittels des vierten Algorithmus Alg4 wird ferner für jeden Sensor der Sensorgruppe ein dem entsprechenden Sensor zugeordnetes drittes Differenzsignal erzeugt. Dazu werden ein erster Signalteil des dem entsprechenden Sensor zugeordneten ersten Messsignals MSi1 und ein zweiter Signalteil desselben ersten Messsignals MSi1 ausgewählt. Dabei hat der erste Signalteil jedes ersten Messsignals MSi1 einen von dem entsprechenden ersten Messsignal MSi1 innerhalb eines kontinuierlichen ersten Zahlenwerteteilbereichs angenommenen Verlauf. Ferner hat der zweite Signalteil jedes ersten Messsignals MSi1 einen von dem entsprechenden ersten Messsignal MSi1 innerhalb eines kontinuierlichen zweiten Zahlenwerteteilbereiches angenommenen Verlauf. Die zwei Zahlenwerteteilbereiche überlappen sich und weisen eine und dieselbe vordefinierte Wertebereichsgröße auf. Weiterhin wird jedes einem Sensor der Sensorgruppe zugeordnete dritte Differenzsignal durch Bilden eines Betrages einer Differenz zwischen dem in den zweiten Zahlenwerteteilbereich verschobenen ersten Signalteil des dem entsprechenden Sensor zugeordneten ersten Messsignals MSi1 und dem zweiten Signalteil desselben ersten Messsignals MSi1 erzeugt.

Mittels des vierten Algorithmus Alg4 wird weiterhin für jeden Sensor der Sensorgruppe ein fünftes Blindheitsrisiko BRi5 anhand mindestens eines jeweils zwischen dem dem entsprechenden Sensor zugeordneten dritten Differenzsignal und dem einem anderen Sensor der Sensorgruppe zugeordneten dritten Differenzsignal durchgeführten Vergleiches ermittelt. Bei dem vierten Algorithmus Alg4 wird ein Signalwertsprung jedes einem Sensor der Sensorgruppe zugeordneten ersten Messsignals MSi1 festgestellt, wenn das dem entsprechenden Sensor zugeordnete dritte Differenzsignal einen Schwellenwert überschreitet. Ferner werden bei jedem für einen Sensor der Sensorgruppe zur Ermittlung seines fünften Blindheitsrisikos BRi5 durchgeführten Vergleich die mittels der zu vergleichenden dritten Differenzsignale festgestellten Signalwertsprünge berücksichtigt.

Bei der zur Ermittlung jedes vierten Blindheitsrisikos BRi4 durchgeführten Auswertung und bei dem mindestens einen zur Ermittlung jedes fünften Blindheitsrisikos BRi5 durchgeführten Vergleich werden jeweils bevorzugt die Parameter SPi, SPj, TU, FG, LW der dem entsprechenden Sensor und dem mindestens einen anderen Sensor der Sensorgruppe zugeordneten ersten Parametergruppe berücksichtigt. Dabei werden bevorzugt auch die Parameter IDi, IDj, Ti, Tj, Pi, Pj der dem entsprechenden Sensor und dem mindestens einen anderen Sensor der Sensorgruppe zugeordneten zweiten Parametergruppe berücksichtigt.

Die zur Ermittlung jedes fünften Blindheitsrisikos BRi5 durchgeführten Auswertungen werden in Zusammenhang mit der Figur 3 anhand des für den beispielhaft ausgewählten Sensor der Sensorgruppe erzeugten ersten Messsignals MSx1 und des dem beispielhaft ausgewählten Sensor der Sensorgruppe zugeordneten dritten Differenzsignal DSx3 näher beschrieben.

Mittels einer Berechnungsvorschrift BV in Form einer Regelwerkes oder einer Formel wird eine Blindheit BLi und eine dazugehörige Konfidenz Ki jedes Sensors der Sensorgruppe jeweils anhand der für den entsprechenden Sensor ermittelten Blindheitsrisiken BRi1, BRi2, BRi3, BRi4, BRi5 bestimmt. Dabei wird für jeden Sensor der Sensorgruppe bevorzugt auch der Fehlzustandsparameter FPi des entsprechenden Sensors berücksichtigt.

Bevorzugt werden jedes Blindheitsrisiko BRi1, BRi2, BRi3, BRi4, BRi5, jede Blindheit BLi und jede Konfidenz Ki jeweils in mehrere Stufen eingeordnet. Beispielsweise kann jedes Blindheitsrisiko BRi1, BRi2, BRi3, BRi4, BRi5, jede Blindheit BLi und jede Konfidenz Ki jeweils als sehr niedrig, niedrig, mittel, hoch oder sehr hoch eingestuft werden.

Figur 2 zeigt einen in Abhängigkeit von einer Zeit t dargestellten und während des beispielhaft ausgewählten Messzyklus vorkommenden Verlauf einer Signalstärke S eines Empfangssignals Exy des beispielhaft ausgewählten Sensors der Sensorgruppe, das Ultraschallsignale, die durch Reflexion von ausgesendeten Ultraschallsignalen entstehen, von dem beispielhaft ausgewählten Sensor empfangen und als Echosignale bezeichnet werden, und die von dem beispielhaft ausgewählten Sensor empfangenen Rauschsignale umfasst. Die von dem beispielhaft ausgewählten Sensor empfangenen Echosignale umfassen auch die von diesem empfangenen Bodencluttersignale. Aus der Figur 2 ist ersichtlich, dass ein mittels des beispielhaft ausgewählten Sensors empfangenes Signal, dessen Amplitude kleiner als ein vordefinierter Signalstärkengrenzwert SWxy1 ist, als ein Bodenclutter- oder Rauschsignal erkannt wird, und, dass ein mittels des beispielhaft ausgewählten Sensors empfangenes Signal, dessen Amplitude größer als der vordefinierte Signalstärkengrenzwert SWxy1 ist, als ein durch Reflexion an einem Objekt stammendes und als Objektechosignal bezeichnetes Echosignal erkannt wird. Zum Messen des während des beispielhaft ausgewählten Messzyklus vorkommenden ersten Signalpegels CPxy der mittels des beispielhaft ausgewählten Sensors empfangenen Bodencluttersignale werden Amplituden der während eines innerhalb des beispielhaft ausgewählten Messzyklus vorkommenden ersten Zeitraumes t1 empfangenen Bodencluttersignale ausgewertet. Beispielsweise kann der für den beispielhaft ausgewählten Sensor bestimmte erste Signalpegel CPxy als eine maximale Amplitude der während des ersten Zeitraumes t1 mittels des beispielhaft ausgewählten Sensors empfangenen Bodencluttersignale definiert sein. Zum Messen des während des beispielhaft ausgewählten Messzyklus vorkommenden zweiten Signalpegels der mittels des beispielhaft ausgewählten Sensors empfangenen Rauschsignale RPxy werden Signalstärken der während eines innerhalb des beispielhaft ausgewählten Messzyklus vorkommenden zweiten Zeitraumes t2 empfangenen Raussignale ausgewertet. Beispielsweise kann der für den beispielhaft ausgewählten Sensor bestimmte zweite Signalpegel CPxy als eine maximale Signalstärke der während des zweiten Zeitraumes t1 mittels des beispielhaft ausgewählten Sensors empfangenen Rauschsignale definiert sein. Aus der Figur 2 ist es auch ersichtlich, dass während eines innerhalb des beispielhaft ausgewählten Messzyklus vorkommenden dritten Zeitraumes t3 ein Objektechosignal mittels des beispielhaft ausgewählten Sensors empfangen wird.

Figur 3 zeigt das dem beispielhaft ausgewählten Sensor zugeordnete erste Messsignal MSx1, das mittels der für den beispielhaft ausgewählten Sensor gemessenen ersten Signalpegel CPxl erzeugt wird, in Abhängigkeit von der wachsenden natürlichen Zahl n. In der Figur 3 wird eine Achse, die von den für den beispielhaft ausgewählten Sensor gemessenen ersten Signalpegeln CPxl annehmbare Werte angibt, mit CPWx gekennzeichnet.

Figur 3 zeigt ferner den Zahlenwertebereich Wn, der mehrere der Laufnummer I, die den beispielhaft ausgewählten Sensor durchgeführten Messzyklen zugeordnet sind, umfasst und innerhalb dessen sich das dem beispielhaft ausgewählten Sensor zugeordnete Messsignal MSx1 erstreckt.

Der Zahlenwertebereich Wn erstreckt sich zwischen einer ersten natürlichen Zahl n1 und einer zweiten natürlichen Zahl n2. Für die innerhalb des Zahlenwertebereiches Wn vorkommenden Laufnummer I gilt folglich die Relation I = n.

In der Figur 3 sind mehrere Messpunkte MPxl, die jeweils einer Laufnummer I und dem für den beispielhaft ausgewählten Sensor während des der entsprechenden Laufnummer I zugeordneten Messzyklus gemessenen ersten Signalpegel CPxl entsprechen, jeweils durch einen kleinen gefüllten Kreis dargestellt. Zur Vereinfachung der Darstellung wurde in der Figur 3 nur ein einzelner Messpunkt MPxl mit dem entsprechenden Bezugszeichen versehen.

Figur 3 zeigt weiterhin auch den ersten Zahlenwerteteilbereich Wn1, in dem sich der erste Signalteil des dem beispielhaft ausgewählten Sensor zugeordneten ersten Messsignals MSx1 erstreckt, und auch den zweiten Zahlenwerteteilbereich Wn2, in dem sich der zweite Signalteil des dem beispielhaft ausgewählten Sensor zugeordneten ersten Messsignals MSx1 erstreckt.

Der erste Zahlenwerteteilbereich Wn1 erstreckt sich zwischen einer dritten natürlichen Zahl n3 und der zweiten natürlichen Zahl n2. Ferner erstreckt sich der zweite Zahlenwerteteilbereich Wn2 zwischen der ersten natürlichen Zahl n1 und einer vierten natürlichen Zahl n4. Die erste natürliche Zahl n1, die zweite natürliche Zahl n2, die dritte natürliche Zahl n3 und die vierten natürlichen Zahl n4 erfüllen die Ungleichung n1 < n3 < n4 < n2, die Gleichung n2 - n3 = n4 -n1 und die weitere Gleichung n3 - n1 = n2 - n4 = z, wobei z eine ausgewählte natürliche Zahl ist.

Figur 3 zeigt weiterhin auch das dem beispielhaft ausgewählten Sensor zugeordnete dritte Differenzsignal DSx3, das durch Bilden des Betrages der Differenz zwischen dem in den zweiten Zahlenwerteteilbereich Wn2 verschobenen ersten Signalteil des dem beispielhaft ausgewählten Sensor zugeordneten ersten Messsignals MSx1 und dem zweiten Signalteil desselben ersten Messsignals MSx1 erzeugt wird.

Im Folgenden wird mit mx1(n, n1 <n < n2) eine erste Funktion bezeichnet, die einen von der wachsenden natürlichen Zahl n abhängigen und innerhalb des Zahlenwertebereiches Wn vorkommenden Verlauf des dem beispielhaft ausgewählten Sensor zugeordneten ersten Messsignals MSx1 beschreibt.

Ferner wird mit mx1(n, n3 < n < n2) ein von der wachsenden natürlichen Zahl n abhängiger und innerhalb des ersten Zahlenwerteteilbereiches Wn1 vorkommender Verlauf des ersten Signalteils des dem beispielhaft ausgewählten Sensor zugeordneten ersten Messsignals MSx1 bezeichnet. Auch wird mit mx1 (n-z, n1 < n < n4) ein von der wachsenden natürlichen Zahl n abhängiger und in dem zweiten Zahlenwertebereich Wn2 vorkommender Verlauf des in dem zweiten Zahlenwertebereich Wn2 verschobenen ersten Signalteils des dem beispielhaft ausgewählten Sensor zugeordneten ersten Messsignals MSx1 bezeichnet. Des Weiteren wird mit mx1(n, n1 < n < n4) ein von der wachsenden natürlichen Zahl n abhängiger und in dem zweiten Zahlenwertebereich Wn2 vorkommender Verlauf des zweiten Signalteils des dem beispielhaft ausgewählten Sensor zugeordneten ersten Messsignals MSx1 bezeichnet.

Im Folgenden wird weiterhin mit dx3(n, n1 <n < n4) eine zweite Funktion bezeichnet, die einen von der wachsenden natürlichen Zahl n abhängigen und innerhalb des zweiten Zahlenwerteteilbereiches Wn2 vorkommenden Verlauf des dem beispielhaft ausgewählten Sensor zugeordneten dritten Differenzsignals DSx3 beschreibt.

Zwischen der zweiten Funktion dx3(n, n1 <n < n4) und der ersten Funktion mx1(n, n1 < n < n2) existiert ein durch die Gleichung

$$dx3(n, n1 < n < n4) = \left| mx1(n\text{-}z, n3 < n < n2) - mx1(n, n1 < n < n4)) \right|$$

angegebener Zusammenhang.

Figur 3 zeigt auch den zum Feststellen eines Signalwertsprunges des dem beispielhaft ausgewählten Sensor zugeordneten ersten Messsignals MSx1 verwendeten Schwellenwert SWx2, der von dem dem beispielhaft ausgewählten Sensor zugeordneten dritten Differenzsignal DSx3 überschritten wird. Aus der Figur 3 ist ersichtlich, dass das dem beispielhaft ausgewählten Sensor zugeordnete erste Messsignal MSX1 einen Signalwertsprung aufweist. In der Figur 3 ist mit Ix1 eine Laufnummer gekennzeichnet, die demjenigen Messzyklus zugeordnet ist, während dessen der Signalwertsprung des dem beispielhaft ausgewählten Sensor zugeordneten ersten Messsignals MSX1 auftritt.

In der Figur 3 wird der Index x nicht für die wachsende natürliche Zahl n und auch nicht für die den durchgeführten Messzyklen zugeordneten Laufnummern I verwendet, da für jeden Sensor der Sensorgruppe eine und dieselbe Anzahl von Messzyklen innerhalb eines und desselben vordefinierten Zeitraumes durchgeführt wird. Da der Zahlenwertebereich Wn, der ersten Zahlenwerteteilbereich Wn1 und der zweite Zahlenwerteteilbereich Wn2 für alle Sensoren der Sensorgruppe jeweils gleich sind, wird der Index x auch diesbezüglich nicht verwendet.

Neben der voranstehenden schriftlichen Offenbarung wird hiermit zur weiteren Offenbarung der Erfindung ergänzend auf die Darstellung in den Figuren 1 bis 3 Bezug genommen.

**Patentansprüche**

1. Verfahren zum Bestimmen einer Blindheit (BLi) eines jeden Sensors einer Sensorgruppe mit wenigstens einem Sensor von mehreren an einem Fahrzeug angebrachten Sensoren, die jeweils zum Aussenden und Empfangen von Ultraschallsignalen ausgebildet sind, **gekennzeichnet durch** folgende Schritte:

   Durchführen von mehreren voneinander unabhängigen Messungen (Mi1, Mi2, Mi3, Mi4) für jeden Sensor der Sensorgruppe, bei denen jeweils ein Ermitteln mindestens eines Blindheitsrisikos (BRi1, BRi2, BRi3, BRi4, BRi5) für den entsprechenden Sensor anhand einer Auswertung einer physikalischen Größe des entsprechenden Sensors oder anhand einer Auswertung von mittels des entsprechenden Sensors empfangenen Ultraschallsignalen erfolgt, und

   Bestimmen einer Blindheit (BLi) und einer dazugehörigen Konfidenz (Ki) jedes Sensors der Sensorgruppe jeweils anhand der für den entsprechenden Sensor ermittelten Blindheitsrisiken (BRi1, BRi2, BRi3, BRi4, BRi5) **dadurch gekennzeichnet, dass**

   für jeden Sensor der Sensorgruppe eine erste Messung (Mi1) der mehreren Messungen (Mi1, Mi2, Mi3, Mi4) mit folgenden Schritten durchgeführt wird:

   wiederholtes Messen eines Impedanzwertes (ZWi) einer Impedanz des entsprechenden Sensors, und Ermitteln eines ersten Blindheitsrisikos (BRi1) für den entsprechenden Sensor anhand einer Auswertung seiner gemessenen Impedanzwerte (ZWi),und

   Messen eines ersten Signalpegels (CPil) von infolge einer Aussendung von Ultraschallsignalen entstandenen und mittels des entsprechenden Sensors empfangenen Bodencluttersignalen, und Durchführen einer weiteren Messung (Mi4) der für den entsprechenden Sensor durchzuführenden mehreren Messungen (Mi1, Mi2, Mi3, Mi4) unter Verwendung von mehreren der für mindestens einen Sensor der Sensorgruppe gemessenen ersten Signalpegel (CPil), wobei die für jeden Sensor der Sensorgruppe durchzuführende weitere Messung (Mi4) folgende Schritte umfasst:

   Erzeugen eines dem entsprechenden Sensor zugeordneten ersten Messsignals (MSi1) mittels der für den entsprechenden Sensor gemessenen ersten Signalpegel (CPil), und Ermitteln eines weiteren Blindheitsrisikos (BRi4) für den entsprechenden Sensor jeweils anhand mindestens einer Auswertung von mehreren jeweils einem anderen Sensor der Sensorgruppe zugeordneten Messsignale. (MSi1, MSj1)

2. Verfahren nach Anspruch 1, **dadurch gekennzeichnet, dass** für jeden Sensor der Sensorgruppe eine zweite Messung (Mi2) der mehreren Messungen (Mi1, Mi2, Mi3, Mi4) mit folgenden Schritten durchgeführt wird: jeweiliges Messen einer Amplitude (UAi) mindestens eines von dem entsprechenden Sensor empfangenen Übersprechsignals, das jeweils ein von einem anderen Sensor der mehreren Sensoren ausgesendeten und von dem entsprechenden Sensor empfangenen Ultraschallsignal ist, und Ermitteln eines zweiten Blindheitsrisikos (BRi2) für den entsprechenden Sensor anhand einer Auswertung der gemessenen Amplitude (UAi) des mindestens einen von dem entsprechenden Sensor empfangenen Übersprechsignals.

3. Verfahren nach einem der vorangehenden Ansprüche, **dadurch gekennzeichnet, dass** für jeden Sensor der Sensorgruppe folgende Schritte durchgeführt werden:

   Messen eines zweiten Signalpegels (RPil) von mittels des entsprechenden Sensors empfangenen Rauschsignalen während eines jeden Messzyklus von für den entsprechenden Sensor durchgeführten mehreren Messzyklen, und

   Durchführen einer dritten Messung (Mi3) der für den entsprechenden Sensor durchzuführenden mehreren Messungen (Mi1, Mi2, Mi3, Mi4) unter Verwendung von mehreren der für mindestens einen Sensor der Sensorgruppe gemessenen ersten Signalpegel (CPil) und/oder unter Verwendung von mehreren der für mindestens einen Sensor der Sensorgruppe gemessenen zweiten Signalpegel (RPil).

4. Verfahren nach Anspruch 3, **dadurch gekennzeichnet, dass** die für jeden Sensor der Sensorgruppe durchzuführende dritte Messung (Mi3) folgende Schritte umfasst:

   Definieren jeweils eines Messwertes für jeden Messzyklus der für den entsprechenden Sensor durchgeführten mehreren Messzyklen,

Bestimmen jedes für den entsprechenden Sensor definierten Messwertes durch Bilden einer Differenz zwischen den für den entsprechenden Sensor in dem entsprechenden Messzyklus gemessenen zwei Signalpegeln (CPil, RPil),

Bestimmen eines Mittelwertes der während der mehreren für den entsprechenden Sensor durchgeführten Messzyklen bestimmten Messwerte, und

Ermitteln eines dritten Blindheitsrisikos (BRi3) für den entsprechenden Sensor anhand einer Auswertung seines gebildeten Mittelwertes.

5. Verfahren nach einem der Ansprüche 3 oder 4, **dadurch gekennzeichnet, dass** die für jeden Sensor der Sensorgruppe durchzuführende weitere Messung (Mi4) zusätzlich folgende Schritte umfasst:

Erzeugen eines dem entsprechenden Sensor zugeordneten zweiten Messsignals (MSi2) mittels der für den entsprechenden Sensor gemessenen zweiten Signalpegeln (RPil), und

Ermitteln eines fünften Blindheitsrisikos (BRi5) für den entsprechenden Sensor jeweils anhand mindestens einer Auswertung von mehreren jeweils einem anderen Sensor der Sensorgruppe zugeordneten Messsignalen (MSi1, MSj1, MSi2, MSj2) der den Sensoren der Sensorgruppe zugeordneten Messsignale (MSi1, MSi2).

6. Verfahren nach Anspruch 5, **dadurch gekennzeichnet, dass** die für jeden Sensor der Sensorgruppe durchzuführende weitere Messung (Mi4) ferner folgende Schritte umfasst:

Zuordnen jeweils einer Laufnummer (I) zu jedem Messzyklus der für den entsprechenden Sensor durchgeführten mehreren Messzyklen,

Definieren eines kontinuierlichen Zahlenwertebereiches (Wn) einer wachsenden natürlichen Zahl (n) derartig, dass der Zahlenwertebereich (Wn) mehrere der Laufnummer (I) der für den entsprechenden Sensor durchgeführten mehreren Messzyklen umfasst,

Erzeugen eines dem entsprechenden Sensor zugeordneten ersten Signals in Abhängigkeit von der wachsenden natürlichen Zahl (n) derartig, dass dieses für jede in dem Zahlenwertebereich (Wn) vorkommende Laufnummer (I) einen Signalwert annimmt, der gleich mit dem für den entsprechenden Sensor während des dem entsprechenden Laufnummer (I) zugeordneten Messzyklus gemessenen ersten Signalpegel (CPil) ist,

und/oder Erzeugens eines dem entsprechenden Sensor zugeordneten zweiten Signals in Abhängigkeit von der wachsenden natürlichen Zahl (n) derartig, dass dieses für jede in dem Zahlenwertebereich (Wn) vorkommende Laufnummer (I) einen Signalwert annimmt, der gleich mit dem für den entsprechenden Sensor während des dem entsprechenden Laufnummer zugeordneten Messzyklus gemessenen zweite Signalpegel (RPil) ist, und

Durchführen des Erzeugens des dem entsprechenden Sensor zugeordneten ersten Messsignals (MSi1) durch Anwenden einer gleitenden Mittelwertfilterung auf das dem entsprechenden Sensor zugeordnete erste Signal und/oder Durchführen des Erzeugens des dem entsprechenden Sensor zugeordneten zweiten Messsignals (MSi2) durch Anwenden einer gleitenden Mittelwertfilterung auf das dem entsprechenden Sensor zugeordnete zweite Signal.

7. Verfahren nach Anspruch 6, **dadurch gekennzeichnet, dass** die für jeden Sensor der Sensorgruppe durchzuführende weitere Messung (Mi4) ferner folgender Schritt umfasst:

Durchführen des Ermittelns des weiteren Blindheitsrisikos (BRi4) anhand einer Auswertung mindestens eines jeweils durch Bilden einer Differenz zwischen dem dem entsprechenden Sensor zugeordneten ersten Messsignal (MSi1) und dem einem anderen Sensor der Sensorgruppe zugeordneten ersten Messsignals (MSj1) erzeugten ersten Differenzsignals und/oder anhand einer Auswertung mindestens eines jeweils durch Bilden einer Differenz zwischen dem dem entsprechenden Sensor zugeordneten zweiten Messsignals (MSi2) und dem einem anderen Sensor der Sensorgruppe zugeordneten zweiten Messsignals (MSj2) erzeugten zweiten Differenzsignals.

8. Verfahren nach einem der Ansprüche 6 oder 7, **dadurch gekennzeichnet**, die für jeden Sensor der Sensorgruppe durchzuführende weitere Messung (Mi4) ferner folgende Schritte umfasst:

Auswählen eines ersten Signalteils des dem entsprechenden Sensor zugeordneten ersten Messsignals (MSi1) und eines zweiten Signalteils desselben ersten Messsignals (MSi1), wobei der erste Signalteil jedes ersten Messsignals (MSi1) einen von dem entsprechenden ersten Messsignal (MSi1) innerhalb eines kontinuierlichen und eine vorbestimmte Wertebereichsgröße aufweisenden ersten Zahlenwerteteilbereichs (Wn1) angenommenen Verlauf hat und der zweite Signalteil jedes ersten Messsignals (MSi1) einen von dem entsprechenden ersten Messsignal (MSi1) innerhalb eines kontinuierlichen und die vorbestimmte Wertebereichsgröße aufweisenden zweiten Zahlenwerteteilbereiches (Wn2) angenommenen Verlauf hat,
Erzeugen eines dem entsprechenden Sensor zugeordneten dritten Differenzsignals (DSx3) durch Bilden eines Betrages einer Differenz zwischen dem in den zweiten Zahlenwerteteilbereich (Wn2) verschobenen ersten Signalteil des dem entsprechenden Sensor zugeordneten ersten Messsignals (MSi1) und dem zweiten Signalteil desselben ersten Messsignals (MSi1) und
Durchführen des Ermittelns des fünften Blindheitsrisikos (BRi5) für den entsprechenden Sensor anhand mindestens eines jeweils zwischen dem dem entsprechenden Sensor zugeordneten dritten Differenzsignal (DSx3) und dem einem anderen Sensor der Sensorgruppe zugeordneten dritten Differenzsignal durchgeführten Vergleiches.

9. Verfahren nach Anspruch 8, **dadurch gekennzeichnet, dass** die für jeden Sensor der Sensorgruppe durchzuführende weitere Messung (Mi4) ferner jeweils folgende Schritte umfasst:

Feststellen eines Signalwertsprunges des dem entsprechenden Sensor zugeordneten ersten Messsignals (MSi1), wenn das dem entsprechenden Sensor zugeordnete dritte Differenzsignal (DSx3) einen Schwellenwert überschreitet, und
Durchführen des mindestens einen Vergleiches zum Bestimmen des fünften Blindheitsrisikos (BRi5) für den entsprechenden Sensors jeweils in Abhängigkeit von den mittels der zu vergleichenden dritten Differenzsignale (DSx3) festgestellten Signalwertsprünge.

10. Vorrichtung zum Bestimmen einer Blindheit (BLi) eines jeden Sensors einer Sensorgruppe mit wenigstens einem Sensor von mehreren an einem Fahrzeug angebrachten Sensoren mit mindestens einer Messeinheit und einer Auswerteeinheit, wobei jeder Sensor zum Aussenden und Empfangen von Ultraschallsignalen ausgebildet ist, **dadurch gekennzeichnet, dass** die mindestens eine Messeinheit dazu ausgebildet ist das Verfahren gemäß einem der Ansprüche 1 bis 9 auszuführen.

## Claims

1. Method for determining a blindness (BLi) of each sensor in a sensor group having at least one sensor of a plurality of sensors which are fitted to a vehicle and are each designed to emit and receive ultrasonic signals, **characterized by** the following steps:

carrying out a plurality of mutually independent measurements (Mi1, Mi2, Mi3, Mi4) for each sensor in the sensor group, during which at least one blindness risk (BRi1, BRi2, BRi3, BRi4, BRi5) is respectively determined for the corresponding sensor on the basis of an evaluation of a physical variable of the corresponding sensor or on the basis of an evaluation of ultrasonic signals received by means of the corresponding sensor, and
determining a blindness (BLi) and an associated confidence (Ki) of each sensor in the sensor group in each case on the basis of the blindness risks (BRi1, BRi2, BRi3, BRi4, BRi5) determined for the corresponding sensor, **characterized in that** a first measurement (Mi1) of the plurality of measurements (Mi1, Mi2, Mi3, Mi4) is carried out for each sensor in the sensor group with the following steps:

repeatedly measuring an impedance value (ZWi) of an impedance of the corresponding sensor, and determining a first blindness risk (BRi1) for the corresponding sensor on the basis of an evaluation of its measured impedance values (ZWi), and
measuring a first signal level (CPi1) of ground clutter signals which are produced as a result of emission of ultrasonic signals- and are received by means of the corresponding sensor, and carrying out a further measurement (Mi4) of the plurality of measurements (Mi1, Mi2, Mi3, Mi4) to be carried out for the corresponding sensor using a plurality of the first signal levels (CPi1) measured for at least one sensor in the sensor group, wherein the further measurement (Mi4) to be carried out for each sensor in the sensor group comprises the following steps:
generating a first measurement signal (MSi1) associated with the corresponding sensor using the first signal levels (CPi1) measured for the corresponding sensor, and determining a further blindness risk (BRi4) for the corresponding sensor in each case on the basis of at least one evaluation of a plurality of measurement signals (MSi1, MSj1) each associated with another sensor in the sensor group.

2. Method according to Claim 1, **characterized in that** a second measurement (Mi2) of the plurality of measurements (Mi1, Mi2, Mi3, Mi4) is carried out for each sensor in the sensor group with the following steps:

respectively measuring an amplitude (UAi) of at least one crosstalk signal which is received by the corresponding sensor and is respectively an ultrasonic signal emitted by another sensor of the plurality of sensors and received by the corresponding sensor, and

determining a second blindness risk (BRi2) for the corresponding sensor on the basis of an evaluation of the measured amplitude (UAi) of the at least one crosstalk signal received by the corresponding sensor.

3. Method according to one of the preceding claims, **characterized in that** the following steps are carried out for each sensor in the sensor group:

measuring a second signal level (RPil) of noise signals received by means of the corresponding sensor during each measurement cycle of a plurality of measurement cycles carried out for the corresponding sensor, and carrying out a third measurement (Mi3) of the plurality of measurements (Mi1, Mi2, Mi3, Mi4) to be carried out for the corresponding sensor using a plurality of the first signal levels (CPil) measured for at least one sensor in the sensor group and/or using a plurality of the second signal levels (RPil) measured for at least one sensor in the sensor group.

4. Method according to Claim 3, **characterized in that** the third measurement (Mi3) to be carried out for each sensor in the sensor group comprises the following steps:

defining in each case a measured value for each measurement cycle of the plurality of measurement cycles carried out for the corresponding sensor,

determining each measured value defined for the corresponding sensor by forming a difference between the two signal levels (CPil, RPil) measured for the corresponding sensor in the corresponding measurement cycle, determining an average of the measured values determined during the plurality of measurement cycles carried out for the corresponding sensor, and determining a third blindness risk (BRi3) for the corresponding sensor on the basis of an evaluation of its formed average.

5. Method according to either of Claims 3 and 4, **characterized in that** the further measurement (Mi4) to be carried out for each sensor in the sensor group additionally comprises the following steps:

generating a second measurement signal (MSi2) associated with the corresponding" sensor by means of the second signal levels (RPil) measured for the corresponding sensor, and

determining a fifth blindness risk (BRi5) for the corresponding sensor in each case on the basis of at least one evaluation of a plurality of measurement signals (MSil, MSjl, MSi2, MSj2), each associated with another sensor in the sensor group, of the measurement signals (MSil, MSi2) associated with the sensors in the sensor group.

6. Method according to Claim 5, **characterized in that** the further measurement (Mi4) to be carried out for each sensor in the sensor group also comprises the following steps:

assigning in each case a sequence number (1) to each measurement cycle of the plurality of measurement cycles carried out for the corresponding sensor,

defining a continuous numerical value range (Wn) of an increasing natural number (n) in such a manner that the numerical value range (Wn) comprises a plurality of the sequence numbers (1) of the plurality of measurement cycles carried out for the corresponding sensor,

generating a first signal associated with the corresponding sensor on the basis of the increasing natural number (n) in such a manner that said signal assumes, for each sequence number (1) occurring in the numerical value range (Wn), a signal value which is equal to the first signal level (Cpil) measured for the corresponding sensor during the measurement cycle associated with the corresponding sequence number (1),

and/or generating a second signal associated with the corresponding sensor on the basis of the increasing natural number (n) in such a manner that said signal assumes, for each sequence number (1) occurring in the numerical value range (Wn), a signal value which is equal to the second signal level (RPil) measured for the corresponding sensor during the measurement cycle associated with the corresponding sequence number, and generating the first measurement signal (MSil) associated with the corresponding sensor by applying sliding average filtering to the first signal associated with the corresponding sensor and/or generating the second measurement signal (MSi2) associated with the corresponding sensor by applying sliding average filtering to the second signal associated with the corresponding sensor.

7. Method according to Claim 6, **characterized in that** the further measurement (Mi4) to be carried out for each sensor in the sensor group also comprises the following step:
determining the further blindness risk (BRi4) on the basis of an evaluation of at least one first difference signal generated in each case by forming a difference between the first measurement signal (MSil) associated with the corresponding sensor and the first measurement signal (MSj1) associated with another sensor in the sensor group and/or on the basis of an evaluation of at least one second difference signal generated in each case by forming a difference between the second measurement signal (MSi2) associated with the corresponding sensor and the second measurement signal (MSj2) associated with another sensor in the sensor group.

8. Method according to either of Claims 6 and 7, **characterized in that** the further measurement (Mi4) to be carried out for each sensor in the sensor group also comprises the following steps:

selecting a first signal part of the first measurement signal (MSi1) associated with the corresponding sensor and a second signal part of the same first measurement signal (MSi1), wherein the first signal part of each first measurement signal (MSi1) has a profile adopted from the corresponding first measurement signal (MSi1) within a continuous first numerical value subrange (Wn1) having a predetermined value range size, and the second signal part of each first measurement signal (MSi1) has a profile adopted from the corresponding first measurement signal (MSi1) within a continuous second numerical value subrange (Wn2) having the predetermined value range size,
generating a third difference signal (DSx3) associated with the corresponding sensor by forming an absolute value of a difference between the first signal part of the first measurement signal (MSi1) associated with the corresponding sensor, which first signal part has been shifted into the second numerical value subrange (Wn2), and the second signal part of the same first measurement signal (MSi1), and
determining the fifth blindness risk (BRi5) for the corresponding sensor on the basis of at least one comparison respectively carried out between the third difference signal (DSx3) associated with the corresponding sensor and the third difference signal associated with another sensor in the sensor group.

9. Method according to Claim 8, **characterized in that** the further measurement (Mi4) to be carried out for each sensor in the sensor group also respectively comprises the following steps:

determining a signal value jump in the first measurement signal (MSil) associated with the corresponding sensor if the third difference signal (DSx3) associated with the corresponding sensor exceeds a threshold value, and carrying out the at least one comparison for determining the fifth blindness risk (BRi5) for the corresponding sensor in each case on the basis of the signal value jumps determined by means of the third difference signals (DSx3) to be compared.

10. Apparatus for determining a blindness (BLi) of each sensor in a sensor group having at least one sensor of a plurality of sensors fitted to a vehicle, having at least one measurement unit and an evaluation unit, wherein each sensor is designed to emit and receive ultrasonic signals, **characterized in that** the at least one measurement unit is designed to carry out the method according to one of Claims 1 to 9.

**Revendications**

1. Procédé de détermination d'un aveuglement (BLi) de chaque capteur d'un groupe de capteurs comprenant au moins un capteur parmi plusieurs capteurs montés sur un
véhicule, lesquels sont respectivement configurés pour émettre et recevoir des signaux ultrasonores, **caractérisé par** les étapes suivantes :

réalisation de plusieurs mesures (Mi1, Mi2, Mi3, Mi4) indépendantes les unes des autres pour chaque capteur du groupe de capteurs, lors desquelles une identification d'au moins un risque d'aveuglement (BRi1, BRi2, BRi3, BRi4, BRi5) est respectivement effectuée pour le capteur correspondant à l'aide d'une interprétation d'une grandeur physique du capteur correspondant ou à l'aide d'une interprétation de signaux ultrasonores reçus au moyen du capteur correspondant, et
détermination d'un aveuglement (BLi) et d'une confiance (Ki) associée de chaque capteur du groupe de capteurs respectivement à l'aide des risques d'aveuglement (BRi1, BRi2, BRi3, BRi4, BRi5) identifiés pour le capteur correspondant, **caractérisé en ce que**
pour chaque capteur du groupe de capteurs, une première mesure (Mi1) des plusieurs mesures (Mi1, Mi2, Mi3, Mi4) est réalisée avec les étapes suivantes :

mesure répétée d'une valeur d'impédance (ZWi) d'une impédance du capteur correspondant, et identification d'un premier risque d'aveuglement (BRi1) pour le capteur correspondant à l'aide d'une interprétation de ses valeurs d'impédance (ZWi) mesurées, et

mesure d'un premier niveau de signal (CPil) de signaux parasites émis par le sol produits en conséquence d'une émission de signaux ultrasonores et reçus au moyen du capteur correspondant, et réalisation d'une mesure supplémentaire (Mi4) des plusieurs mesures (Mi1, Mi2, Mi3, Mi4) à réaliser pour le capteur correspondant en utilisant plusieurs des premiers niveaux de signal (CPil) mesurés pour au moins un capteur du groupe de capteurs, la mesure supplémentaire (Mi4) à réaliser pour chaque capteur du groupe de capteurs comprenant les étapes suivantes :

génération d'un premier signal de mesure (MSi1) associé au capteur correspondant au moyen du premier niveau de signal (CPil) mesuré pour le capteur correspondant, et identification d'un risque d'aveuglement supplémentaire (BRi4) pour le capteur correspondant, respectivement à l'aide d'au moins une interprétation de plusieurs signaux de mesure (MSi1, MSj1) respectivement associés à un autre capteur du groupe de capteurs.

2. Procédé selon la revendication 1, **caractérisé en ce que** pour chaque capteur du groupe de capteurs, une deuxième mesure (Mi2) des plusieurs mesures (Mi1, Mi2, Mi3, Mi4) est réalisée avec les étapes suivantes :

respectivement mesure d'une amplitude (UAi) d'au moins un signal de diaphonie reçu par le capteur correspondant, qui est respectivement un signal ultrasonore émis par un autre capteur des plusieurs capteurs et reçu par le capteur correspondant, et

identification d'un deuxième risque d'aveuglement (BRi2) pour le capteur correspondant à l'aide d'une interprétation de l'amplitude (UAi) mesurée de l'au moins un signal de diaphonie reçu par le capteur correspondant.

3. Procédé selon l'une des revendications précédentes, **caractérisé en ce que** pour chaque capteur du groupe de capteurs, les étapes suivantes sont exécutées :

mesure d'un deuxième niveau de signal (RPil) de signaux de bruit reçus au moyen du capteur correspondant pendant chaque cycle de mesure des plusieurs cycles de mesure réalisés pour le capteur correspondant, et réalisation d'une troisième mesure (Mi3) des plusieurs mesures (Mi1, Mi2, Mi3, Mi4) à réaliser pour le capteur correspondant en utilisant plusieurs des premiers niveaux de signal (CPil) mesurés pour l'au moins un capteur du groupe de capteurs et/ou en utilisant plusieurs des deuxièmes niveaux de signal (RPil) mesurés pour l'au moins un capteur du groupe de capteurs.

4. Procédé selon la revendication 3, **caractérisé en ce que** la troisième mesure (Mi3) à réaliser pour chaque capteur du groupe de capteurs comprend les étapes suivantes :

définition respective d'une valeur mesurée pour chaque cycle de mesure des plusieurs cycles de mesure réalisés pour le capteur correspondant,

détermination de chaque valeur mesurée définie pour le capteur correspondant par formation d'une différence entre deux niveaux de signal (CPil, RPil) mesurés pour le capteur correspondant dans le cycle de mesure correspondant,

détermination d'une valeur moyenne des valeurs mesurées déterminées pendant les plusieurs cycles de mesure réalisés pour le capteur correspondant,

identification d'un troisième risque d'aveuglement (BRi3) pour le capteur correspondant à l'aide d'une interprétation de sa valeur moyenne formée.

5. Procédé selon la revendication 3 ou 4, **caractérisé en ce que** la mesure supplémentaire (Mi4) à réaliser pour chaque capteur du groupe de capteurs comprend en plus les étapes suivantes :

génération d'un deuxième signal de mesure (MSi2) associé au capteur correspondant au moyen du deuxième niveau de signal (RPil) mesuré pour le capteur correspondant, et identification d'un cinquième risque d'aveuglement (BRi5) pour le capteur correspondant respectivement à l'aide d'au moins une interprétation de plusieurs signaux de mesure (MSi1, MSj1, MSi2, MSj2) respectivement associés à un autre capteur du groupe de capteurs parmi les signaux de mesure (MSi1, MSi2) associés aux autres capteurs du groupe de capteurs.

6. Procédé selon la revendication 5, **caractérisé en ce que** la mesure supplémentaire (Mi4) à réaliser pour chaque capteur du groupe de capteurs comprend en outre les étapes suivantes :

affectation respective d'un numéro courant (I) à chaque cycle de mesure des cycles de mesure réalisés pour le capteur correspondant,

définition d'une plage de valeurs numériques (Wn) continue d'un nombre naturel croissant (n) de telle sorte que la plage de valeurs numériques (Wn) comprend plusieurs des numéros courants (I) des plusieurs cycles de mesure réalisés pour le capteur correspondant,

génération d'un premier signal associé au capteur correspondant en fonction du nombre naturel croissant (n) de telle sorte que celui-ci adopte, pour chaque numéro courant (I) qui se produit dans la plage de valeurs numériques (Wn), une valeur de signal qui est égale au premier niveau de signal (CPil) mesuré pour le capteur correspondant pendant le cycle de mesure associé au numéro courant (I) correspondant,

et/ou génération d'un deuxième signal associé au capteur correspondant en fonction du nombre naturel croissant (n) de telle sorte que celui-ci adopte, pour chaque numéro courant (I) qui se produit dans la plage de valeurs numériques (Wn), une valeur de signal qui est égale au deuxième niveau de signal (RPil) mesuré pour le capteur correspondant pendant le cycle de mesure associé au numéro courant correspondant, et

réalisation de la génération du premier signal de mesure (MSi1) associé au capteur correspondant en appliquant un filtrage de valeur moyenne glissant sur le premier signal associé au capteur correspondant et/ou réalisation de la génération du deuxième signal de mesure (MSi2) associé au capteur correspondant en appliquant un filtrage de valeur moyenne glissant sur le deuxième signal associé au capteur correspondant.

7. Procédé selon la revendication 6, **caractérisé en ce que** la mesure supplémentaire (Mi4) à réaliser pour chaque capteur du groupe de capteurs comprend en outre l'étape suivante :
réalisation de l'identification du risque d'aveuglement supplémentaire (BRi4) à l'aide d'une interprétation d'au moins un premier signal différentiel, respectivement généré par formation d'une différence entre le premier signal de mesure (MSi1) associé au capteur correspondant et le premier signal de mesure (MSj1) associé à un autre capteur du groupe de capteurs et/ou à l'aide d'une interprétation d'au moins un deuxième signal différentiel, respectivement généré par formation d'une différence entre le deuxième signal de mesure (MSi2) associé au capteur correspondant et le deuxième signal de mesure (MSj2) associé à un autre capteur du groupe de capteurs.

8. Procédé selon l'une des revendications 6 et 7, **caractérisé en ce que** la mesure supplémentaire (Mi4) à réaliser pour chaque capteur du groupe de capteurs comprend en outre les étapes suivantes :

sélection d'une première partie de signal du premier signal de mesure (MSi1) associé au capteur correspondant et d'une deuxième partie de signal du même premier signal de mesure (MSi1), la première partie de signal de chaque premier signal de mesure (MSi1) possédant un tracé adopté par le premier signal de mesure (MSi1) correspondant à l'intérieur d'une première plage partielle de valeurs numériques (Wn1) continue et présentant une grandeur de plage de valeurs prédéterminée et la deuxième partie de signal de chaque premier signal de mesure (MSi1) possédant un tracé adopté par le premier signal de mesure (MSi1) correspondant à l'intérieur d'une deuxième plage partielle de valeurs numériques (Wn2) continue et présentant la grandeur de plage de valeurs prédéterminée, génération d'un troisième signal différentiel (DSx3) associé au capteur correspondant par formation d'une valeur absolue d'une différence entre la première partie de signal, décalée dans la deuxième plage partielle de valeurs numériques (Wn2), du premier signal de mesure (MSi1) associé au capteur correspondant et la deuxième partie de signal du même premier signal de mesure (MSi1) et
réalisation de l'identification du cinquième risque d'aveuglement (BRi5) pour le capteur correspondant à l'aide d'au moins une comparaison respectivement entre le troisième signal différentiel (DSx3) associé au capteur correspondant et un troisième signal différentiel associé à un autre capteur du groupe de capteurs.

9. Procédé selon la revendication 8, **caractérisé en ce que** la mesure supplémentaire (Mi4) à réaliser pour chaque capteur du groupe de capteurs comprend en outre les étapes suivantes :
constatation d'un saut de valeur de signal du premier signal de mesure (MSi1) associé au capteur correspondant lorsque le troisième signal différentiel (DSx3) associé au capteur correspondant dépasse une valeur de seuil, et réalisation de l'au moins une comparaison en vue de déterminer le cinquième risque d'aveuglement (BRi5) pour le capteur correspondant respectivement en fonction des sauts de valeur de signal constatés au moyen des troisièmes signaux différentiels (DSx3) à comparer.

10. Dispositif de détermination d'un aveuglement (BLi) de chaque capteur d'un groupe de capteurs comprenant au moins un capteur parmi plusieurs capteurs montés sur un véhicule, comprenant au moins une unité de mesure et une unité d'interprétation, chaque capteur étant configuré pour émettre et recevoir des signaux ultrasonores, **caractérisé en ce que** l'au moins une unité de mesure est configurée pour mettre en œuvre le procédé selon l'une des revendications 1 à 9.

Fig. 1

EP 3 073 287 B1

17

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008004641 A1
- DE 102009003049 A1
- DE 102005013589 A1
- DE 102012216968 A1
- DE 10247971 A1
- DE 102013205312 A1
- EP 2000822 A1
- DE 102008042820 A1
- US 20020047780 A1